# EUROPEAN PATENT APPLICATION

(11) **EP 1 433 974 A1**
(43) Date of publication of application: **30.06.2004**
(21) Application number: 03078785.7
(22) Date of filing: 01.12.2003
(51) Int. Cl.: F16F 9/53

(54) **Magnetorheological damper assembly and piston**

(30) Priority: 23.12.2002 US 328056
(71) Applicant: Delphi Technologies, Inc., Troy, MI 48007 (US)
(72) Inventor: Lun, Saiman, Centerville, OH 45458 (US)
(74) Representative: Denton, Michael John

(57) **Abstract**

The invention provides a magnetorheological damper assembly and piston. The assembly 10 includes a housing 20 with a fluid 30 carried therein, a piston 40 slidably carried in the housing, a rod 80 and a valve 60 both operably attached to the piston 40. The piston 40 includes at least one passageway 44 formed therein. The valve 60 includes at least one bypass opening 68 formed therein and at least one variable opening 62 formed between a piston surface 48 and the valve 60. The valve 60 provides asymmetric fluid 30 flow through the passageway 44. During operation, the variable opening 62 selectively restricts fluid 30 flow and the bypass opening 68 maintains fluid 30 flow through the passageway 44.

## Description

### TECHNICAL FIELD OF THE INVENTION

The present invention relates generally to vehicular suspension systems. More particularly, the invention relates to a magnetorheological (MR) damper assembly and piston.

### BACKGROUND OF THE INVENTION

Linear suspension dampers, such as shock absorbers and McPherson struts, may include a rod and piston moving within a fluid-filled housing. Suspension movements transmitted to the rod and piston may be dampened as the damper compresses and rebounds. Desirable damper performance usually requires that significantly less dampening forces are generated during a compression stroke as compared to a rebound stroke. The use of a magnetorheological (MR) fluid may be utilized to provide such "asymmetric" dampening forces.

MR fluids are generally suspensions of magnetic particles such as iron or iron alloys in a fluid medium. The flow characteristics of these fluids can change by several orders of magnitude within milliseconds when subjected to a suitable magnetic field due to suspension of the particles. The ferromagnetic particles remain suspended under the influence of magnetic fields and applied forces. MR fluids are well known and have been found to have desirable electromagnetomechanical interactive properties for controlling dissipative forces along the damper's axis.

A linear acting MR damper piston may include a coil assembly, a core, and an annular piston ring positioned around the pole pieces to form an annular flow passageway. When the piston is displaced, MR fluid is forced through the passageway from one area of the damper housing to another. When the coil is energized (e.g., damper on-state), a magnetic field permeates a portion of the passageway and excites a transformation of the MR fluid to a state that exhibits increased damping force (i.e., the MR fluid viscosity is increased). The amount of dampening force may be selectively controlled by adjusting the current run through the coil assembly. Thus, the selective control of applied current may be used to generate asymmetric dampening forces. Using MR state transformation to generate asymmetric dampening forces may have disadvantages. For example, a substantial amount of total MR dampening capacity may be used to generate rebound stroke dampening forces. Thus, the ability of the damper to handle finely-tuned dampening or other events may be diminished. It would be desirable to generate asymmetric dampening forces without the need for MR state transformations. As such, MR dampening capacity could be preserved to handle events requiring additional dampening force and other circumstances.

Several strategies have been developed to generate asymmetric dampening forces. An example of such a strategy includes U.S. Patent No. 6,095,486 to Ivers *et al.,* which is incorporated by reference herein. In the Ivers patent, several different approaches are used to provide asymmetric dampening forces in an MR fluid device (e.g., mount or damper). In one aspect, for example, a one-way check valve is provided and is operative with a passive passageway arranged in parallel to a MR controllable passageway. The check valve provides asymmetric dampening forces across the passive passageway creating higher pressure differentials in a first direction (e.g., rebound) and a lower in a second direction (e.g., compression) without rapidly switching the current to a piston coil.

Although such strategies provide asymmetric dampening forces without active MR state transformations, they may restrict movement of the piston at lower damper velocities during damper on-state. At these lower damper velocities, it is sometimes desirable to provide relatively "free" movement of the piston during damper on-state. This "free" movement is generally not achievable with simple one-way check valve pistons due to the increase in viscosity of the MR fluid during damper on-state. Accordingly, it would be desirable to provide a strategy for modulating the fluid flow through a on-state damper piston with relatively "free" movement at lower damper velocities.

Therefore, it would be desirable to provide a magnetorheological damper assembly and piston that overcomes the aforementioned and other disadvantages.

### SUMMARY OF THE INVENTION

One aspect of the present invention provides a magnetorheological damper assembly. The assembly includes a housing with a fluid carried therein, a piston slidably carried in the housing, a rod and a valve both operably attached to the piston. The piston includes at least one passageway formed therein. The valve includes at least one bypass opening formed therein and at least one variable opening formed between a piston surface and the valve. The valve provides asymmetric fluid flow through the passageway. During operation of the assembly, the variable opening selectively restricts fluid flow and the bypass opening maintains fluid flow through the passageway.

Another aspect of the present invention provides a magnetorheological piston. The piston includes a piston body including at least one passageway formed therein and a valve operably attached to the piston body. The valve includes at least one bypass opening formed therein and at least one variable opening formed between a piston surface and the valve. The valve provides asymmetric fluid flow through the passageway. During operation of the piston, the variable opening selectively restricts fluid flow and the bypass opening maintains fluid flow through the passageway.

Yet another aspect of the present invention provides a magnetorheological piston. The piston includes a piston body including at least one passageway formed therein and valve means for providing asymmetric fluid flow through the passageway during operation of the piston.

The foregoing and other features and advantages of the invention will become further apparent from the following detailed description of the presently preferred embodiments, read in conjunction with the accompanying drawings. The detailed description and drawings are merely illustrative of the invention, rather than limiting the scope of the invention being defined by the appended claims and equivalents thereof.

### BRIEF DESCRIPTION OF THE DRAWINGS

FIG. 1 is a cross-sectional view of a magnetorheological vehicle damper assembly in accordance with the present invention;
FIGS. 2A and 2B are orthogonal detailed cross-sectional views of the piston shown in FIG. 1;
FIGS. 3A and 3B are detailed cross-sectional views of alternate embodiments including a valve operably attached to a piston flange portion in accordance with the present invention; and
FIG. 4 is a graph of on-state damper force versus velocity for a prior art vehicle damper assembly and a vehicle damper assembly in accordance with the present invention.

### DESCRIPTION OF THE PRESENTLY PREFERRED EMBODIMENTS

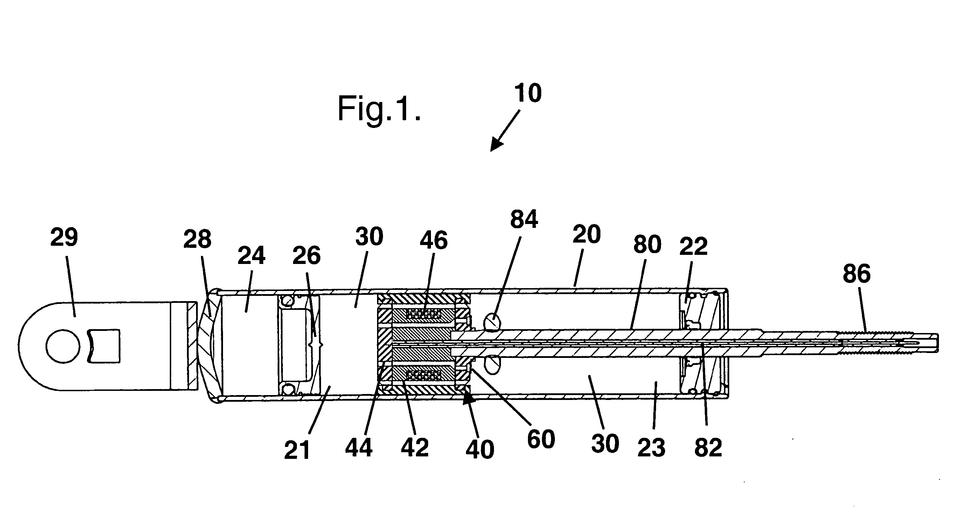

Referring to the drawings, wherein like reference numerals refer to like elements, FIG. 1 is a cross-sectional view of a magnetorheological damper assembly made in accordance with the present invention and shown generally by numeral 10. Those skilled in the art will recognize that the assembly 10 may include a number of alternate damper designs and may be employed in a variety of applications. In the present description, the assembly 10 is shown and described as a linear acting fluid magnetorheological (MR) damper for generating asymmetric dampening forces in a motor vehicle suspension system.

Assembly 10 includes a housing 20 with a fluid 30 carried therein and a piston 40 slidably carried therein. Assembly 10 further includes a rod 80 and a valve 60 both operably attached to the piston 40. Piston 40 includes at least one, in this case two, passageways 42, 44 formed therein.

In one embodiment, the housing 20, piston 40, rod 80, and valve 60 may be manufactured substantially from any type of sufficiently rigid materials such as steel, aluminum, metal, metal alloy, composites, and the like. Fluid 30 may be any type of MR fluids known in the art for use in MR-type vehicle dampers. Piston 40, for example, may be formed from low-carbon steel with nickel plating. Low-carbon steel materials typically provide electro-magnetic induction properties compatible with MR fluids. Those skilled in the art will recognize that the nature of the fluid 30 and constituent materials of the assembly 10 may vary without limiting the operation of the present invention.

In one embodiment, the piston 40 may include a coil 46 for generating an electromagnetic field. Coil 46 may include one or more conductive elements, such as a metallic wire, for carrying an electric current. The electric current may be provided and controlled externally (e.g., by an electrical source and vehicle computer system) to dynamically regulate dampening forces. Valve 60 is preferably positioned at least a minimum distance from the coil 46 so as to be substantially distant from the electromagnetic field. An electrical conductor 82 may extend through the rod 80 for providing electrical current to the coil 46 from an external power source (not shown).

In one embodiment, the rod 80 may include at least one bumper 84 to limit piston 40 range of motion and "quiet" piston 40 contact with a first housing end portion 22 (e.g., during a rebound stroke). Bumper 84 may be formed from an elastomeric material compatible with fluid 30, such as a polyurethane material. Housing 20 may include a gas 24 contained by a cap 26 to provide a force against piston 40 as it travels toward a second housing end portion 28 (e.g., during a compression stroke). Housing 20 and rod 80 may include a wheel assembly mount 29 and a vehicle chassis mount 86, respectively, to operably attach the assembly 10 to a vehicle.

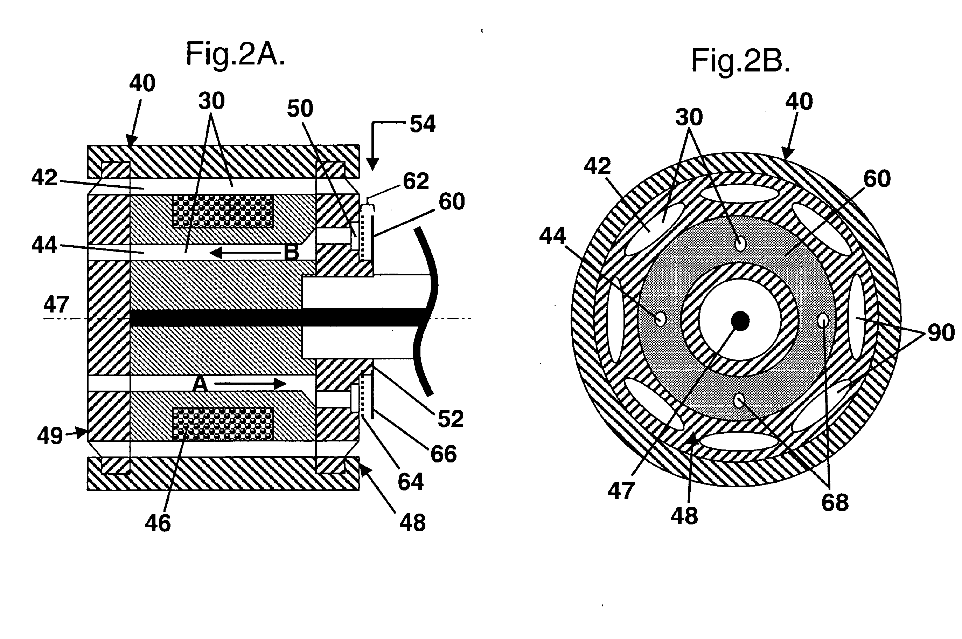

FIG. 2A is a detailed cross-sectional view of the piston 40 shown in FIG. 1. In one embodiment, piston 40 may include a bypass reservoir 50 positioned adjacent an end of the passageway 44. Bypass reservoir 50 may have a substantially circular ring cross-sectional shape with a cross-sectional area greater than that of passageway 44. As such, fluid 30 may accumulate in the bypass reservoir 50.

In one embodiment, passageways 42, 44 may be substantially coaxially aligned with a piston longitudinal axis 47 wherein passageway 42 may be positioned radially outward from passageway 44. Passageway 42 may be an annular gap having a substantially circular ring cross-sectional shape. Passageway 44 may be one or more, in this case four, channels extending through the piston 40. Furthermore, passageways 42, 44 may extend from a first piston surface 48 to a second piston surface 49 thereby allowing fluid 30 to pass through the piston 40. Passageway 42 may be substantially magnetically energizeable by the coil 46. Coil 46 may be electrically energized and the generated magnetic field may influence fluid 30 positioned within the passageway 42. Passageway 44 may be substantially magnetically non-energizeable and fluid 30 positioned therein may be substantially free of magnetic field effects. Those skilled in the art will recognize that the passageway 42, 44 and coil 46 geometry, position, number, and magnetic field effects may vary without limiting the function of the present invention.

At least one variable opening 62 is formed between the first piston surface 48 and the valve 60. In one embodiment as shown in FIG. 2A and in more detail in FIG. 3A, the valve 60 may be disposed on a piston flange portion 52. Valve 60 position may be centered at the piston longitudinal axis 47 and may extend radially outward from the piston flange portion 52. Valve 60 may be slidably movable back-and-forth (double arrows C) from a first position 64 adjacent the first piston surface 48 to a second position 66 further away from the first piston surface 48, with a plurality of positions therebetween. As the valve 60 slides further from the first piston surface 48, the size of the variable opening 62 increases until the valve 60 reaches the second position 66.

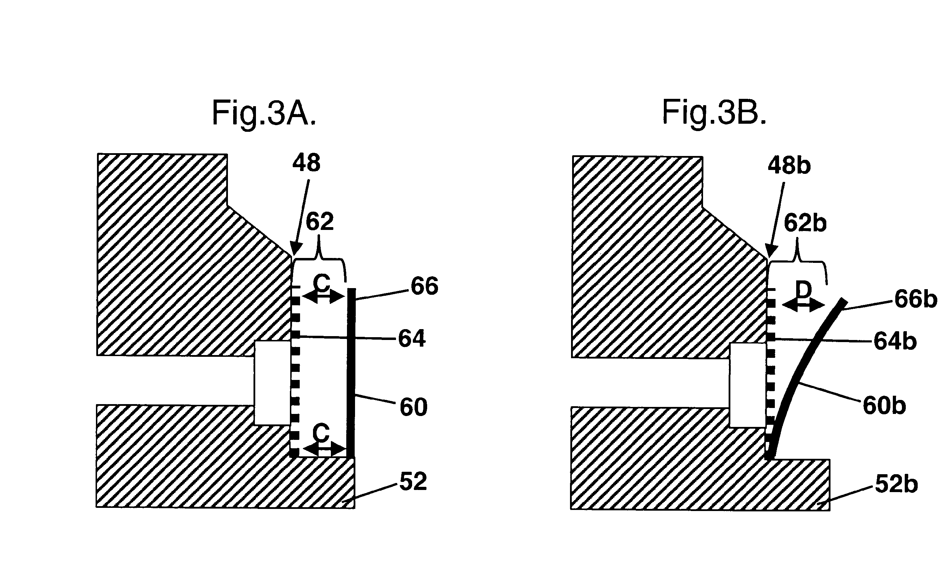

In another embodiment as shown in FIG. 3B, valve 60b may be disposed on a piston flange portion 52b. Valve 60b may be deflected back-and-forth (double arrow D) from a first position 64b (dotted line) adjacent a first piston surface 48b to a second position 66b (solid line) further away from the first piston surface 48b, with a plurality of positions therebetween. As the valve 60b is deflected from the first piston surface 48b, the size of a variable opening 62b increases until the valve 60b reaches the second position 66b. In this case, the valve 60b is deflected by flexing away from the first piston surface 48b while remaining attached to the piston flange portion 52b. It should be recognized by one skilled in the art that the size of variable opening 48, 48b and the manner in which it is opened may vary.

FIG. 2B is a detailed cross-sectional view of the piston 40 of FIG. 2A taken along arrows 54. In one embodiment, the valve 60 may be substantially disc shaped and may include at least one, in this case four, bypass openings 68 formed therein to allow fluid 30 flow through the piston 40 (i.e., through passageway 44). Each bypass openings 68 may be substantially aligned with a corresponding passageway 44. Pairs of the bypass openings 68 may be diametrically positioned wherein two bypass openings 68 may be spaced at approximately 180 degrees about the piston longitudinal axis 47. First piston surface 48 may include a plurality, in this case eight, of openings 90 formed therein to allow fluid 30 flow through the piston 40 (i.e., through passageway 42). Those skilled in the art will appreciated that the bypass opening 68 and opening 90 geometry, number, and position may vary while allowing fluid 30 to flow through the piston 40 in accordance with the present invention.

Referring to FIG. 1, operation of the assembly 10 is now described in the context of generating asymmetric dampening forces in a motor vehicle suspension system. During operation, forces exerted on the suspension system are opposed, or dampened, by the assembly 10 thereby providing a "smoother ride". Assembly 10 undergoes "compression" as the piston 40 slides toward the second housing end portion 28. Assembly 10 undergoes "rebound" as the piston 40 slides toward the first housing end portion 22. During compression and rebound, the fluid 30 may be forced to flow between a first 21 and a second 23 housing compartments through the passageways 42, 44. The fluid 30 flow and thus piston 40 movements are met with frictional resistance thereby generating the asymmetric dampening forces.

Referring now to FIGS. 2A and 2B, the flow of fluid 30 may be modulated through passageway 42 in a manner known in the art. Coil 46 may generate the magnetic field for changing fluid 30 viscosity and thus modulate fluid 30 flow through the passageway 42. Although the coil 46 and passageway 42 may be used to generate asymmetric dampening forces, doing so typically requires rapidly switching the coil 46 current. Alternatively, the valve 60 may generate the asymmetric dampening forces by providing asymmetric fluid flow through the passageway 44. As such, an MR dampening capacity provided by the passageway 42 and coil 46 may be preserved to handle finely-tuned dampening and/or other events requiring additional dampening forces.

During a compression stroke, fluid 30 pressure on the second piston surface 49 initially exceeds fluid 30 pressure on the first piston surface 48. The pressure difference forces fluid 30 to flow through passageways 42, 44 in direction A. As fluid 30 flows through passageway 44 in direction A, the fluid 30 exerts a force on the valve 60 causing it to open (i.e., to the right direction of FIG. 2A; from the first position 64 to the second position 66) thus increasing size of the variable opening 62. Fluid 30 flows through the variable opening 62 and the bypass openings 68 as the variable opening 62 is opened. As such, fluid 30 flow through the passageway 44 during the compression stroke may occur through both the variable opening 62 and the bypass openings 68.

During a rebound stroke, fluid 30 pressure on the first piston surface 48 initially exceeds fluid 30 pressure on the first piston surface 49. The pressure difference forces fluid 30 to flow through passageways 42, 44 in direction B. As fluid 30 flows through passageway 44 in direction B, the fluid 30 exerts a force on the valve 60 causing it to close (i.e., to the left direction of FIG. 2A; from the second position 66 to the first position 64) thus closing the variable opening 62. When valve 60 contacts the first piston surface 48, the variable opening 62 closes substantially restricting fluid 30 flow therethrough. The fluid 30, however, continues to flow through the bypass openings 68. In contrast to the compression stroke, fluid 30 flow through the passageway 44 during the rebound stroke may occur substantially through the bypass openings 68. The asymmetric fluid 30 flow through the passageway 41 from compression to rebound generates the asymmetric dampening forces.

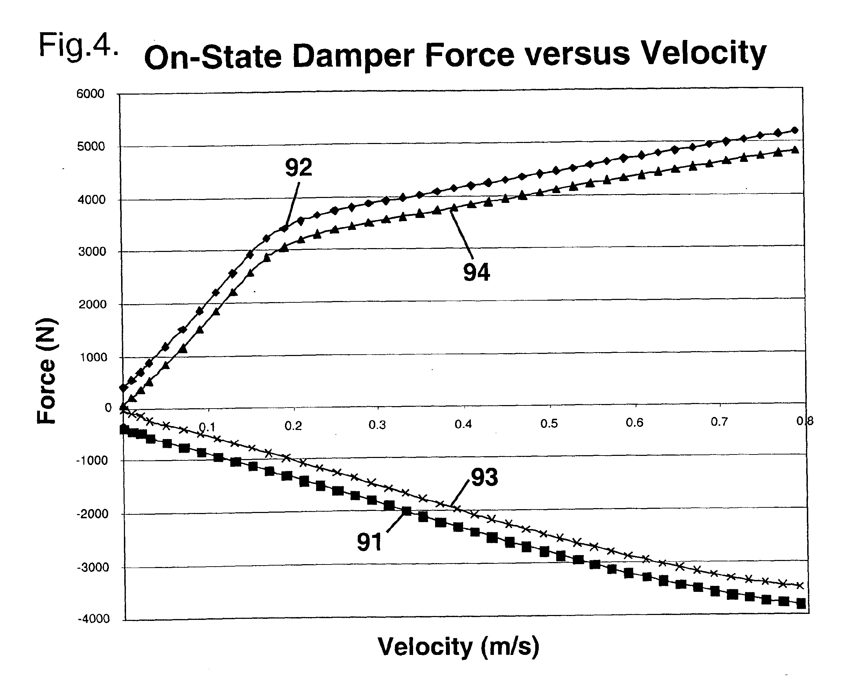

The asymmetric dampening forces may depend on damper velocity. FIG. 4 is a graph of on-state damper force versus velocity for a prior art vehicle damper assembly and a vehicle damper assembly in accordance with the present invention. Asymmetric dampening forces may be generated with prior art dampers wherein the degree of dampening force may be less during compression 91 than rebound 92 for a given on-state damper velocity. Asymmetric dampening forces may also be generated with the present assembly wherein the degree of dampening force may be less during compression 93 than rebound 94 for a given on-state damper velocity.

For any given on-state damper velocity, however, compression 93 and rebound 94 forces may be less than prior art compression 91 and rebound 92 forces, which is due to the additional fluid flow provided through the bypass opening(s). This difference becomes significant at lower damper velocities where prior art compression 91 and rebound 92 forces may be many times greater than compression 93 and rebound 94 forces. Accordingly, the piston of the present invention may have relatively "free" movement at lower on-state damper velocities.

Referring collectively to FIGS. 1-4, damper forces may be inversely proportional to the sizes of the variable opening 62 and bypass openings 68. As such, the openings 62, 68 may be sized to tune the damper force versus velocity response characteristics. In one embodiment, the bypass opening 68 size may be enlarged or number may be increased to allow additional fluid 30 flow. This may result in decreased dampening force for a given velocity as well as "free" on-state piston 40 movement over a wider range of low velocities. In another embodiment, the variable opening 62 size may be reduced to restrict fluid 30 flow thereby increasing dampening force for a given velocity. Those skilled in the art will recognize that the assembly 10 and piston 40 of the present assembly may be alternatively tuned to provide a myriad of damper force versus velocity characteristics. For example, the sizes of the variable and bypass openings 62, 68 may be adapted for different dampening applications, as with different vehicle weights, dampening profiles, or vehicle handling.

It is important to note that the present invention is not limited to generating asymmetric dampening forces having greater dampening forces during rebound than compression. Those skilled in the art will recognize that the assembly 10, piston 40, valve 60 and portions thereof may be re-arranged to provide greater dampening forces during compression than rebound.

While the embodiments of the invention disclosed herein are presently considered to be preferred, various changes and modifications can be made without departing from the spirit and scope of the invention. For example, the damper assembly and piston are not limited to any particular design, configuration, or arrangement. Specifically, the valve and variable and bypass openings configuration, size, shape, geometry, location, orientation, and number, may vary without limiting the utility of the invention.

Upon reading the specification and reviewing the drawings hereof, it will become immediately obvious to those skilled in the art that myriad other embodiments of the present invention are possible, and that such embodiments are contemplated and fall within the scope of the presently claimed invention. The scope of the invention is indicated in the appended claims, and all changes that come within the meaning and range of equivalents are intended to be embraced therein.

## Claims

1. A magnetorheological damper assembly 10 comprising:
a housing 20 including a fluid 30 carried therein;
a piston 40 slidably carried in the housing 20, the piston 40 including at least one passageway 44 formed therein;
a rod 80 operably attached to the piston 40; and
a valve 60 operably attached to the piston 40, the valve 60 including at least one bypass opening 68 formed therein and at least one variable opening 62 formed between a piston surface 48 and the valve 60; wherein the valve 60 provides asymmetric fluid 30 flow through the passageway 44; wherein the variable opening 62 selectively restricts fluid 30 flow through the passageway 44 and the bypass opening 68 maintains fluid 30 flow through the passageway 44 during operation of the assembly 10.

2. The assembly of claim 1 wherein the valve 60 is substantially disc shaped.

3. The assembly of claim 1 wherein the valve 60 is disposed on a piston flange portion 52 and is slidably movable from a first position 64 adjacent the piston surface 48 to a second position 66 further away from the piston surface 48.

4. The assembly of claim 1 wherein the valve 60b is disposed on a piston flange portion 52b and is deflected from a first position 64b adjacent the piston surface 48b to a second position 66b further away from the piston surface 48b.

5. The assembly of claim 1 wherein the variable opening 62 restricts fluid 30 flow during a damper rebound stroke.

6. The assembly of claim 1 wherein the variable opening 62 allows fluid 30 flow during a damper compression stroke.

7. The assembly of claim 1 wherein the bypass opening 68 allows fluid 30 flow during a damper rebound stroke and a damper compression stroke.

8. The assembly of claim 1 wherein bypass openings 68 are diametrically positioned.

9. The assembly of claim 1 further comprising a bypass reservoir 50 formed within the piston 40 and positioned adjacent an end of the passageway 44 to allow fluid 30 accumulation therein.

10. The assembly of claim 1 further comprising a coil 46 positioned within the piston 40 for generating an electromagnetic field wherein the valve 60 is positioned at least a minimum distance from the coil 46 so as to be substantially distant from the electromagnetic field.

11. A magnetorheological piston comprising:
a piston body 40 including at least one passageway 44 formed therein; and
a valve 60 operably attached to the piston body 40, the valve 60 including at least one bypass opening 68 formed therein and at least one variable opening 62 formed between a piston surface 48 and the valve 60; wherein the valve provides 60 asymmetric fluid 30 flow through the passageway 44; wherein the variable opening 62 selectively restricts fluid 30 flow through the passageway 44 and the bypass opening 68 maintains fluid 30 flow through the passageway 44 during operation of the piston 40.

12. The piston of claim 11 wherein the valve 60 is substantially disc shaped.

13. The piston of claim 11 wherein the valve 60 is disposed on a piston flange portion 52 and is slidably movable from a first position 64 adjacent the piston surface 48 to a second position 66 further away from the piston surface 48.

14. The piston of claim 11 wherein the valve 60b is disposed on a piston flange portion 52b and is deflected from a first position 64 adjacent the piston surface 48b to a second position 66b further away from the piston surface 48b.

15. The piston of claim 11 wherein the variable opening 62 restricts fluid 30 flow during a damper rebound stroke.

16. The piston of claim 11 wherein the variable opening 62 allows fluid 30 flow during a damper compression stroke.

17. The piston of claim 11 wherein the bypass opening 68 allows fluid 30 flow during a damper rebound stroke and a damper compression stroke.

18. The piston of claim 11 wherein bypass openings 68 are diametrically positioned.

19. The piston of claim 11 further comprising a bypass reservoir 50 formed within the piston 40 and positioned adjacent an end of the passageway 44 to allow fluid 30 accumulation therein.

20. The piston of claim 11 further comprising a coil 46 positioned within the piston 40 for generating an electromagnetic field wherein the valve 60 is positioned at least a minimum distance from the coil 46 so as to be substantially distant from electromagnetic field.

21. A magnetorheological piston comprising:
a piston body 40 including at least one passageway 44 formed therein; and
valve means 60 for providing asymmetric fluid flow through the passageway 44 during operation of the piston 40.
